# EUROPEAN PATENT SPECIFICATION

(11) **EP 2 858 007 B1**
(45) Date of publication and mention of the grant of the patent: **15.08.2018**
(21) Application number: 12877671.3
(22) Date of filing: 27.09.2012
(51) Int. Cl.: G06K 9/00, G06K 9/46, G06K 9/62

(54) **SIFT FEATURE BAG BASED BOVINE IRIS IMAGE RECOGNITION METHOD**
AUF SIFT-BEUTEL BASIERENDES BILDERKENNUNGSVERFAHREN FÜR BOVINE IRIS
PROCÉDÉ DE RECONNAISSANCE DE L'IMAGE DE L'IRIS D'UN BOVIN, BASÉ SUR UN ENSEMBLE DE CARACTÉRISTIQUES SIFT

(30) Priority: 31.05.2012 CN 201210177023
(43) Date of publication of application: 08.04.2015
(73) Proprietor: Southeast University, Nanjing Jiangsu 210096 (CN)
(72) Inventor: ZHAO, Lindu, Xuanwu Nanjing 210090 (CN); YANG, Shicai, Binjiang Hangzhou 310051 (CN); SUN, Shengnan, Jiangning Nanjing 211188 (CN); SONG, Yang, Longkou Yantai Shandong 265718 (CN)
(74) Representative: Rippel, Hans Christoph
(86) International application number: PCT/CN2012/082165
(87) International publication number: WO 2013/177878

(56) References cited:
- WO-A1-01/35321
- CN-A- 101 447 025
- CN-A- 102 693 421
- US-A1- 2009 208 064
- Hui Zhang ET AL: "Ethnic Classification Based on Iris Images" In: "Correct System Design", 1 January 2011 (2011-01-01), Springer International Publishing, Cham 032548, XP55252402, ISSN: 0302-9743 ISBN: 978-3-642-22877-3 vol. 7098, pages 82-90, DOI: 10.1007/978-3-642-25449-9_11, * sections 3 and 4, Fig. 2 and 4. *
- ZHAOFENG HE ET AL: "Toward Accurate and Fast Iris Segmentation for Iris Biometrics", IEEE TRANSACTIONS ON PATTERN ANALYSIS AND MACHINE INTELLIGENCE, IEEE COMPUTER SOCIETY, USA, vol. 31, no. 9, 1 September 2009 (2009-09-01), pages 1670-1684, XP011266635, ISSN: 0162-8828, DOI: 10.1109/TPAMI.2008.183
- BELCHER, G. ET AL.: 'Region-based SIFT approach to iris recognition.' OPTICS AND LASERS IN ENGINEERING. 28 August 2008, pages 139 - 147, XP025693652

## Description

### Technical field

The present invention relates to a bovine iris image recognition method, particularly to a method for identifying an imperfect bovine iris image which is rotated, shifted, locally blocked or inconsistent in scale.

### Background Art

Iris recognition is considered as one of the most reliable biometric recognition technologies and may be widely applied in identity card recognition, mine access control and criminal tracking and so on. Compared with the methods for authenticating identity by fingerprint, face, tread and other biological features of human body, the authentication by iris has higher accuracy and better anti-falsification. Conventional animal identifications mainly adopt artificial tags, such as ear tags. They are prone to fall and lose, and are rather inconvenient for management. Compared with conventional animal identification methods, identifying animals by iris technology is characterized by high safety and high anti-falsification.

However, compared with human eye iris recognition, the existing animal iris image recognition technology has problems at least in two aspects: firstly, in practical application, the animal to be recognized is unable to cooperate as human beings, resulting in imperfections in the acquired images, such as rotation, shift, local blockage or inconsistent scale; secondly, the existing iris detecting technology can hardly obtain accurate outer boundary of iris, thus it is hard to get the high-quality normalized iris images with the same procedure with human iris recognition. Under these circumstances, the prior art can hardly obtain accurate recognition results and consequently the application of animal iris recognition technology in food traceability system is limited.

The article of Hui Zhang et al. "Ethnic Classification Based on Iris Images", published in "Biometric Recognition: 6th Chinese Conference, CCBR 2011, Beijing, China, December 3-4, 2011. Proceedings", 2011, Springer International Publishing, ISBN:978-3-642-22877-3 describes an ethnic classification method based on supervised codebook optimization and Locality-constrained Linear Coding (LLC). US 2009/208064 A1 (CAMBIER JAMES L [US]) 20 August 2009 (2009-08-20) discloses a system for animal identification based on iris images. The article of ZHAOFENG HE ET AL: "Toward Accurate and Fast Iris Segmentation for Iris Biometrics", published in IEEE TRANSACTIONS ON PATTERN ANALYSIS AND MACHINE INTELLIGENCE, IEEE COMPUTER SOCIETY, USA, vol. 31, no. 9, 1 September 2009, describes a human iris segmentation method that considers a non-cooperative scenario.

### Contents of the Invention

The object of the present invention is, against the problems of the existing bovine iris recognition technology, providing a method which can accurately recognize imperfect bovine iris images.

Technical scheme employed in the present invention: before specific description of the method in the present invention, related definitions are provided: (a) imperfect bovine iris image: a bovine iris image which is rotated, shifted, locally blocked or inconsistent in scale, but has a complete inner boundary contour; (b) target bovine iris library: an image library storing bovine iris of known identity, by comparison with which the identity of an image to be recognized is determined; (c) SIFT features: image feature descriptors obtained by SIFT (Scale Invariant Feature Transform) method.

A bovine iris image recognition method based on SIFT feature bag, including the following steps: (1) executing Step 2 if the optimal SIFT feature bag is not detected, otherwise going to Step 10; (2) obtaining a training image set used to acquire a SIFT feature bag; (3) acquiring an optimal SIFT feature bag based on the training image set; (4) obtaining a target bovine iris image set; (5) preprocessing every target bovine iris image; (6) detecting iris inner boundary for every target bovine iris image; (7) obtaining SIFT feature points of every target bovine iris image by SIFT method; (8) removing the SIFT feature points in the iris inner boundary to obtain valid SIFT feature points of every target bovine iris image; (9) comparing the SIFT feature points of every target bovine iris image with the optimal SIFT feature bag and obtaining a feature histogram of every target bovine iris image; (10) receiving the image to be recognized; (11) preprocessing the image to be recognized; (12) detecting iris inner boundary for the image to be recognized; (13) obtaining SIFT feature points of the image to be recognized by SIFT method; (14) removing the SIFT feature points in the iris inner boundary to obtain valid SIFT feature points of the image to be recognized; (15) comparing the SIFT feature points of the image to be recognized with the optimal SIFT feature bag and acquiring a feature histogram of the image to be recognized; (16) calculating the histogram distance between the image to be recognized and every image in the target bovine iris image set; (17) choosing the object corresponding to the target bovine iris image with the smallest histogram distance as recognition result; (18) ending.

Preferably, the step of acquiring an optimal SIFT feature bag includes: (1) obtaining a training image set; (2) preprocessing every training bovine iris image; (3) detecting iris inner boundary for every training bovine iris image; (4) obtaining SIFT feature points of every training bovine iris image by SIFT method; (5) removing the SIFT feature points in the iris inner boundary to obtain an valid SIFT feature point set of the training image; (6) merging the SiFT feature point sets of all training images to obtain a SIFT feature point space of the training sample; (7) adopting KNN (K-Nearest Neighbor) method to conduct clustering analysis of the SIFT feature point space of the training sample to obtain K categories and the corresponding feature means; (8) giving every feature mean a tag to identify the category this feature mean stands for and obtain an optimal SIFT feature bag consisting of K feature means with tag; (9) ending.

### Beneficial Effects

As accurate detecting of iris outer boundary and normalization of iris images are not needed, the method in the present invention can still realize accurate recognition even if the bovine iris image is rotated, shifted, locally blocked or inconsistent in scale. It helps to improve the accuracy and reliability of bovine iris image recognition.

### Description of Drawings

Fig. 1 is a basic block diagram of the present invention;
Fig. 2 is a detailed work flow chart of the method in the present invention;
Fig. 3 is a work flow chart for acquisition of a SIFT feature bag in the present invention.

### Embodiments

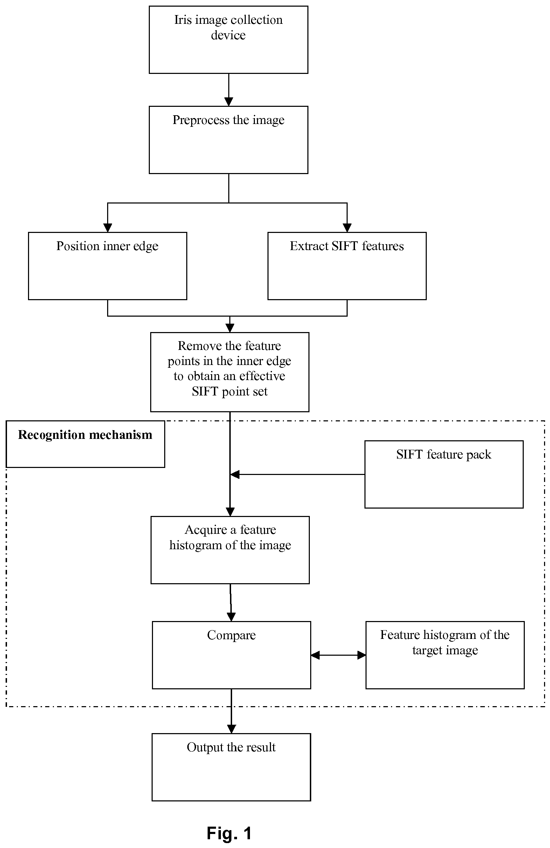

Below the present invention is further described with reference to accompanying drawings and specific embodiments:
As shown in Fig. 1, a bovine iris digital gray level image is acquired through an iris image collection device and then the image is preprocessed based on visual observation to acquire an valid area of the image. An valid SIFT feature point set of an valid bovine iris image is obtained by iris inner boundary detecting and SIFT feature extraction method. Then processing is conducted by the recognition mechanism, usually including acquiring a feature histogram of the iris image and comparing it with the existing images in the target bovine iris library.

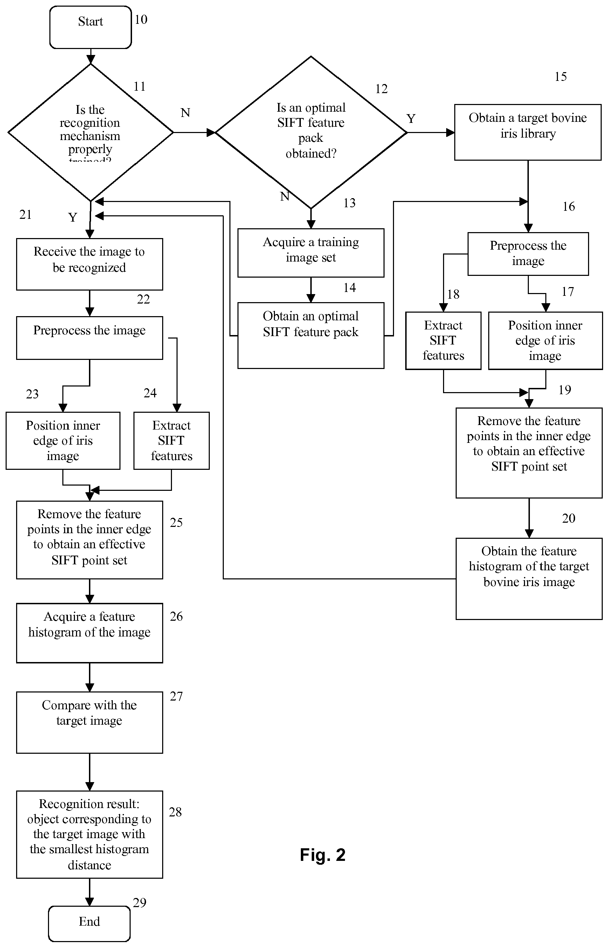

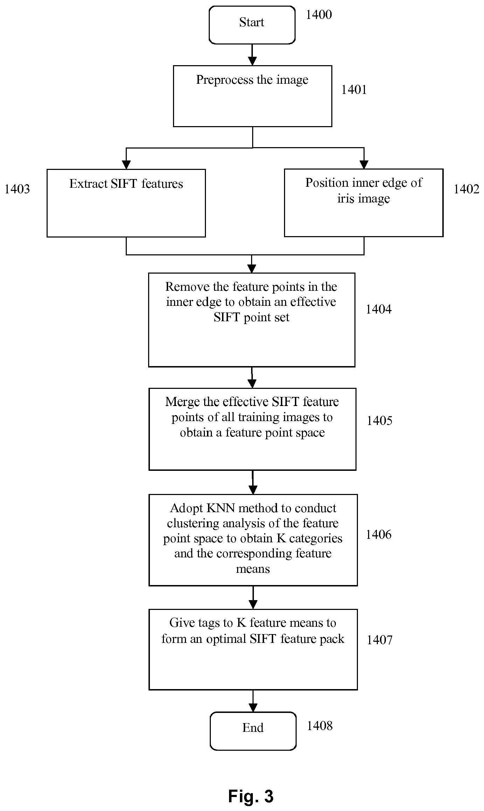

The detailed work flow of the present invention is as shown in Fig. 2. Step 10 is an initial action. Step 11 judges whether the recognition mechanism is properly trained. If yes, then Step 21 is executed; otherwise, Step 12 is executed. Step 12 judges whether an optimal SIFT feature bag is obtained. If yes, then Step 15 is executed; otherwise, Step 13 is executed. Step 13 acquires a training image set used to acquire an optimal SIFT feature bag. Every bovine in this image set has at least two images. Step 14 selects an optimal SIFT feature bag based on the training image set. The feature bag contains K SIFT feature means. Here K is an integer value designated by the user, such as 1000. This selection process adopts the algorithm specially designed in the present invention. This step will be introduced in details below with reference to Fig. 3.

After an optimal SIFT feature bag is selected, Step 15 acquires a target bovine iris library. In the library, every bovine has at least one image. Step 16 preprocesses the iris image and obtains an effective area of the image. Here through visual observation, the maximum rectangular area covering the iris area is selected as the effective area of the image. Step 17 positions the inner boundary in the effective area of the image. Here active contour line method is adopted to position iris inner boundary. Step 18 obtains SIFT feature points of the image in the effective area of the image by SIFT method. Step 19 removes SIFT feature points inside iris inner boundary to obtain an valid SIFT feature point set. Step 20 adopts ANN (Approximate Nearest Neighbor) method to compare every feature in the valid SIFT feature point set with the feature means in the optimal SIFT feature bag, gives every valid SIFT feature point a tag corresponding to the feature mean in the optimal SIFT feature bag and counts them, thus so as to obtaining a feature histogram corresponding to the target bovine iris image. Step 21 receives the image to be recognized. Steps 22, 23, 24, 25 and 26 adopt the methods which are the same as those adopted in Steps 16, 17, 18, 19 and 20 to preprocess the image to be recognized, position iris inner boundary, extract SIFT features, obtain an valid SIFT feature point set, and finally obtain a feature histogram of the image. Step 27 adopts ANN method to compare the distance between the feature histogram of the image to be recognized and the feature histogram of every image in the target bovine iris library. Step 28 outputs the result. The object corresponding to the target iris image with the smallest histogram distance is the recognition result. Step 29 is an ending state.

It should be noted that Step 13 and Step 14 of Fig. 2 are exclusively for obtaining an optimal SIFT feature bag. Once this feature bag is selected, it can be directly used in different target bovine iris image libraries. Fig. 3 describes in details Step 14 of Fig. 2. The role of this step is to select an optimal SIFT feature bag having K feature means based on the training image set. Here K is an integer value designated by the user. Step 1400 of Fig. 3 is an initial state. Steps 1401, 1402, 1403 and 1404 adopt the methods which are the same as those adopted in Steps 16, 17, 18 and 19 of Fig. 2 to preprocess every training image, position iris inner boundary, extract SIFT features and finally obtain valid SIFT feature point sets of corresponding training images. Step 1405 merges the SIFT feature point sets of all training images and obtains a SIFT feature point space of the training sample. Step 1406 adopts KNN (K-Nearest Neighbor) method to conduct clustering analysis of the SIFT feature point space of the training sample to obtain K categories and the corresponding K feature means. Here K is designated by the user, such as 1000. Generally speaking, the value of K is between hundreds and thousands according to the size of SIFT feature point space. Step 1407 gives every feature mean a tag to identify the category this feature mean stands for. In this way, an optimal SIFT feature bag consisting of K feature means with tag is obtained. Lastly, Step 1408 is the ending state of Fig. 3.

## Claims

1. A bovine iris image recognition method based on SIFT feature bag, **characterized in that** this method includes the following steps:
(1) Executing Step 2 if the optimal SIFT feature bag is not detected, otherwise going to Step 10;
(2) Obtaining a training image set used to generate the optimal SIFT feature bag;
(3) Acquiring an optimal SIFT feature bag based on the training image set;
(4) Obtaining a target bovine iris image set;
(5) Preprocessing every target bovine iris image;
(6) Detecting iris inner boundary for every target bovine iris image;
(7) Obtaining SIFT feature points of every target bovine iris image by SIFT method;
(8) Removing the SIFT feature points in the region inside the iris inner boundary to obtain valid SIFT feature points of every target bovine iris image;
(9) Comparing the SIFT feature points of every target bovine iris image with the optimal SIFT feature bag and obtaining a feature histogram of every target bovine iris image;
(10) Receiving the image to be recognized;
(11) Preprocessing the image to be recognized;
(12) Detecting iris inner boundary for the image to be recognized;
(13) Obtaining SIFT feature points of the image to be recognized by SIFT method;
(14) Removing the SIFT feature points in the region inside the iris inner boundary to obtain valid SIFT feature points of the image to be recognized;
(15) Comparing the SIFT feature points of the image to be recognized with the optimal SIFT feature bag and acquiring a feature histogram of the image to be recognized;
(16) Calculating histogram distance between the image to be recognized and every image in the target bovine iris image set;
(17) Choosing the object corresponding to the target bovine iris image with the smallest histogram distance as recognition result;
(18) Ending;
and wherein
the step of acquiring an optimal SIFT feature bag includes:
(A) Obtaining a training image set;
(B) Preprocessing every training bovine iris image;
(C) Detecting iris inner boundary for every training bovine iris image;
(D) Obtaining SIFT feature points of every training bovine iris image by SIFT method;
(E) Removing the SIFT feature points in the region inside the iris inner boundary to obtain an valid SIFT feature point set of the training image;
(F) Merging the SIFT feature point sets of all training images to obtain a SIFT feature point space of the training samples;
(G) Adopting KNN method to conduct clustering analysis of the SIFT feature point space of the training sample to obtain K categories and the corresponding feature means.
(H) Giving every feature mean a tag to identify the category this feature mean stands for and obtain an optimal SIFT feature bag consisting of K feature means with tag;
(I) Ending.

## Patentansprüche

1. Ein Rinder-Irisbilderkennungsverfahren basierend auf SIFT-Feature-Bag, **dadurch gekennzeichnet, dass** das Verfahren die folgenden Schritte beinhaltet:
(1) Ausführung von Schritt 2, wenn das optimale SIFT-Feature-Bag nicht erkannt wird, andernfalls gehe zu Schritt 10;
(2) Erhalten eines Trainingsbildsatzes, der zum Erzeugen des optimalen SIFT-Feature-Bags verwendet wird;
(3) Erlangen eines optimalen SIFT-Feature-Bags basierend auf dem Trainingsbildsatz;
(4) Erhalten eines Vorgabe-Rinderiris-Bildsatzes;
(5) Vorverarbeiteten aller Vorgabe-Rinderirisbilder;
(6) Erkennen einer inneren Irisbegrenzung für jedes Vorgabe-Rinderirisbild;
(7) Erhalten von SIFT-Merkmalspunkten für jedes Vorgabe-Rinderirisbild mittels SIFT-Verfahren;
(8) Entfernen der SIFT-Merkmalspunkte in dem Bereich innerhalb der inneren Irisbegrenzung, um gültige SIFT-Merkmalspunkte von jedem Vorgabe-Rinderirisbild zu erhalten;
(9) Vergleichen der SIFT-Merkmalspunkte von jedem Vorgabe-Rinderirisbild mit dem optimalen SIFT-Feature-Bag und Erhalten eines Merkmalshistogramms für jedes Vorgabe-Rinderirisbild;
(10) Empfangen des zu erkennenden Bildes;
(11) Vorverarbeiten des zu erkennenden Bildes;
(12) Erkennen einer inneren Irisbegrenzung für das zu erkennende Bild;
(13) Erhalten von SIFT-Merkmalspunkten des zu erkennenden Bildes mittels SIFT-Verfahren;
(14) Entfernen der SIFT-Merkmalspunkte in dem Bereich innerhalb der inneren Irisbegrenzung, um gültige SIFT-Merkmalspunkte von dem zu erkennenden Bild zu erhalten;
(15) Vergleichen der SIFT-Merkmalspunkte des zu erkennenden Bildes mit dem optimalen SIFT-Feature-Bag und Erlangen eines Merkmalshistogramms von dem zu erkennenden Bild;
(16) Berechnen eines Histogrammabstands zwischen dem zu erkennenden Bild und jedem Bild in dem Vorgabe-Rinderiris-Bildsatz;
(17) Wählen des dem Vorgabe-Rinderirisbild mit dem kleinsten Histogrammabstand entsprechenden Objekts als Erkennungsergebnis;
(18) Beenden;
und wobei
der Schritt des Erlangens eines optimalen SIFT-Feature-Bags beinhaltet:
(A) Erhalten eines Trainingsbildsatzes;
(B) Vorverarbeiten jedes Trainings-Rinderirisbildes;
(C) Erkennen einer inneren Irisbegrenzung für jedes Trainings-Rinderirisbild;
(D) Erhalten von SIFT-Merkmalspunkten für jedes Trainings-Rinderirisbild mittels SIFT-Verfahren;
(E) Entfernen der SIFT-Merkmalspunkte in dem Bereich innerhalb der inneren Irisbegrenzung, um einen gültigen SIFT-Merkmalspunktsatz von dem Trainingsbild zu erhalten;
(F) Zusammenführen der SIFT-Merkmalspunktsätze aller Trainingsbilder, um einen SIFT-Merkmalspunktraum der Trainingsmuster zu erhalten;
(G) Einsetzen des KNN-Verfahrens, um eine Clusteranalyse des SIFT-Merkmalspunktraums der Trainingsmuster durchzuführen, um K Kategorien und die korrespondierenden Merkmals-Mittel zu erhalten;
(H) Vergeben eines Kennzeichens an jedes Merkmals-Mittel, um die Kategorie zu identifizieren, für die dieses Merkmals-Mittel steht, und Erhalten eines optimalen SIFT-Feature-Bag bestehend aus K Merkmals-Mitteln mit Kennzeichen;
(I) Beenden.

## Revendications

1. Procédé de reconnaissance d'image de l'iris d'un bovin basé sur un ensemble de caractéristiques SIFT, **caractérisé en ce que** ce procédé comprend les étapes suivantes consistant :
(1) à exécuter l'étape 2 si l'ensemble de caractéristiques SIFT optimal n'est pas détecté, sinon à passer à l'étape 10 ;
(2) à obtenir une série d'images d'apprentissage utilisée pour générer l'ensemble de caractéristiques SIFT optimal ;
(3) à acquérir un ensemble de caractéristiques SIFT optimal en se basant sur la série d'images d'apprentissage ;
(4) à obtenir une série d'images d'iris de bovin cible ;
(5) à prétraiter chaque image d'iris de bovin cible ;
(6) à détecter une limite interne d'iris pour chaque image d'iris de bovin cible ;
(7) à obtenir des points de caractéristique SIFT de chaque image d'iris de bovin cible au moyen du procédé SIFT ;
(8) à supprimer les points de caractéristique SIFT dans la région à l'intérieur de la limite interne d'iris pour obtenir des points de caractéristique SIFT valides de chaque image d'iris de bovin cible ;
(9) à comparer les points de caractéristique SIFT de chaque image d'iris de bovin cible avec l'ensemble de caractéristiques SIFT optimal et à obtenir un histogramme de caractéristiques de chaque image d'iris de bovin cible ;
(10) à recevoir l'image qui doit être reconnue ;
(11) à prétraiter l'image qui doit être reconnue ;
(12) à détecter la limite interne d'iris pour l'image qui doit être reconnue ;
(13) à obtenir des points de caractéristique SIFT de l'image qui doit être reconnue au moyen du procédé SIFT ;
(14) à supprimer les points de caractéristique SIFT dans la région à l'intérieur de la limite interne d'iris pour obtenir des points de caractéristique SIFT valides de l'image qui doit être reconnue ;
(15) à comparer les points de caractéristique SIFT de l'image qui doit être reconnue, avec l'ensemble de caractéristiques SIFT optimal et à acquérir un histogramme de caractéristiques de l'image qui doit être reconnue ;
(16) à calculer une distance d'histogramme entre l'image qui doit être reconnue, et chaque image dans la série d'images d'iris de bovin cible ;
(17) à choisir l'objet correspondant à l'image d'iris de bovin cible ayant la distance d'histogramme la plus petite en tant que résultat de reconnaissance ;
(18) à terminer ;
et dans lequel
l'étape d'acquisition d'un ensemble de caractéristiques SIFT optimal consiste :
(A) à obtenir une série d'images d'apprentissage ;
(B) à prétraiter chaque image d'iris de bovin d'apprentissage ;
(C) à détecter une limite interne d'iris pour chaque image d'iris de bovin d'apprentissage ;
(D) à obtenir des points de caractéristique SIFT de chaque image d'iris de bovin d'apprentissage au moyen du procédé SIFT ;
(E) à supprimer les points de caractéristique SIFT dans la région à l'intérieur de la limite interne d'iris pour obtenir une série de points de caractéristique SIFT valides de l'image d'apprentissage ;
(F) à fusionner les séries de points de caractéristique SIFT de toutes les images d'apprentissage pour obtenir un espace de points de caractéristique SIFT des échantillons d'apprentissage ;
(G) à adopter le procédé KNN pour effectuer une analyse par segmentation de l'espace de points de caractéristique SIFT de l'échantillon d'apprentissage pour obtenir K catégories et les moyennes de caractéristique correspondantes ;
(H) à donner à chaque moyenne de caractéristique une étiquette pour identifier la catégorie que cette moyenne de caractéristique représente, et à obtenir un ensemble de caractéristiques SIFT optimal se composant de K moyennes de caractéristique avec l'étiquette ;
(I) à terminer.
